# EUROPÄISCHE PATENTSCHRIFT

(11) **EP 3 464 887 B1**
(45) Veröffentlichungstag und Bekanntmachung des Hinweises auf die Patenterteilung: **06.10.2021**
(21) Anmeldenummer: 17726633.5
(22) Anmeldetag: 31.05.2017
(51) Int. Cl.: F03D 7/02, F03D 7/04

(54) **VERFAHREN ZUM STEUERN EINER WINDENERGIEANLAGE UND WINDENERGIEANLAGE**
METHOD FOR CONTROLLING A WIND TURBINE AND WIND TURBINE
PROCÉDÉ POUR COMMANDER UNE ÉOLIENNE ET ÉOLIENNE

(30) Priorität: 02.06.2016 DE 102016110190
(43) Veröffentlichungstag der Anmeldung: 10.04.2019
(73) Patentinhaber: Wobben Properties GmbH, 26607 Aurich (DE)
(72) Erfinder: MESSING, Ralf, 26605 Aurich (DE); LEBOSQ, Rodolphe, 26603 Aurich (DE); RUBNER, Florian, 26607 Aurich (DE)
(74) Vertreter: Eisenführ Speiser
(86) Internationale Anmeldenummer: PCT/EP2017/063086
(87) Internationale Veröffentlichungsnummer: WO 2017/207598

(56) Entgegenhaltungen:
- EP-A1- 2 336 557
- EP-A1- 2 857 677
- EP-A1- 2 976 525
- EP-A2- 1 918 581
- WO-A1-01/86142
- DE-A1-102011 081 795
- KR-A- 20140 087 704
- US-A1- 2010 054 940
- US-A1- 2010 143 119
- US-A1- 2010 143 121
- US-A1- 2012 146 332
- US-A1- 2012 148 402

## Beschreibung

Die vorliegende Erfindung betrifft ein Verfahren zum Steuern einer Windenergieanlage sowie eine Windenergieanlage.

Moderne Windenergieanlagen weisen typischerweise drei Rotorblätter auf, deren Anstellwinkel bzw. Pitchwinkel verstellbar ist. Dazu kann im Bereich der Rotorblattwurzel bzw. am Übergang zwischen der Rotorblattwurzel und dem Nabenbereich der Windenergieanlage mindestens ein Pitch- oder Anstellmotor vorgesehen sein. Durch Aktivieren dieses Motors kann der Pitchwinkel bzw. der Anstellwinkel der Rotorblätter verstellt werden. Die Änderung des Pitchwinkels bzw. Anstellwinkels erfolgt insbesondere dann, wenn die Windenergieanlage in den Bereich ihrer Nennleistung kommt und die Windgeschwindigkeit weiter ansteigt. Durch Änderung des Pitchwinkels soll die auf die Windenergieanlage einwirkende mechanische Belastung reduziert werden. Durch Ändern des Pitchwinkels kann die Fläche des Rotorblattes, welche dem Wind ausgesetzt ist, reduziert werden.

Eine Dimensionierung der Rotorblätter einer Windenergieanlage erfolgt so, dass die Rotorblätter der Anlage (bei allen Betriebspunkten der Anlage) ablösefrei umströmt werden können, um eine Ablösung der Strömung zu vermeiden, welches zu Leistungsverlusten durch die Windenergieanlage führen kann. Die Ablösefreiheit des umströmten Rotorblattes muss bei allen klimatischen oder meteorologischen Bedingungen sichergestellt sein.

In der prioritätsbegründenden deutschen Patentanmeldung hat das Deutsche Patent- und Markenamt die folgenden Dokumente recherchiert: US 2010/0054940 A1, US 2010/0143121 A1, WO 2001/086142 A1 und US 2008/0001409 A1. US2010143119 A1 offenbart einen Regensensor sowie Pitchmotoren an den Blattwurzeln.

Es ist somit eine Aufgabe der vorliegenden Erfindung, ein Verfahren zum Steuern einer Windenergieanlage vorzusehen, welches einen effektiven Betrieb der Windenergieanlage unter verschiedenen klimatischen Bedingungen bzw. meteorologischen Bedingungen ermöglicht.

Diese Aufgabe wird durch ein Verfahren zum Steuern einer Windenergieanlage nach Anspruch 1 sowie durch eine Windenergieanlage nach Anspruch 6 gelöst.

Somit wird ein Verfahren zum Steuern einer Windenergieanlage vorgesehen. Ein Niederschlag im Bereich der Windenergieanlage wird durch einen Niederschlagssensor erfasst. Die Windenergieanlage welche einen Rotor mit einer Mehrzahl von Rotorblättern aufweist, welche jeweils eine Rotorblattwurzel aufweisen, wobei ein Pitchwinkel der Rotorblätter mittels Pitchmotoren, welche an den Rotorblattwurzeln angreifen, einstellbar ist, wird in einer ersten Betriebsart basierend auf einer ersten Pitchwinkelkennlinie, bei der der Pitchwinkel in Abhängigkeit der Leistung eingestellt wird, und in einer zweiten Betriebsart basierend auf einer zweiten Pitchwinkelkennlinie, bei der der Pitchwinkel in Abhängigkeit der Leistung eingestellt wird, gesteuert. Die zweite Pitchwinkelkennlinie ist von der ersten Pitchwinkelkennlinie verschieden. Die erste Betriebsart wird ausgewählt, wenn kein Niederschlag vorhanden ist, und die zweite Betriebsart wird ausgewählt, wenn Niederschlag vorhanden ist.

Da die zweite Pitchwinkelkennlinie von der ersten Pitchwinkelkennlinie verschieden ist, ergeben sich unterschiedliche Pitchwinkel bei einer gleichen Leistung. Damit kann der Pitchwinkel bei trockenem Wetter ein anderer sein als der Pitchwinkel bei Niederschlag.

Die Erfindung betrifft den Gedanken, eine Windenergieanlage basierend auf mindestens zwei unterschiedlichen Pitchwinkelkennlinien zu steuern. Eine Pitchwinkelkennlinie gibt dabei einen Wert eines Pitchwinkels für eine abgegebene elektrische Leistung an. Die Entscheidung, welche der zwei Kennlinien zu verwenden ist, wird in Abhängigkeit davon getroffen, ob Niederschlag vorhanden ist.

In einer ersten Betriebsart wird der Pitchwinkel der Rotorblätter gemäß einer ersten Pitchwinkelkennlinie und in einer zweiten Betriebsart kann die Windenergieanlage gemäß einer zweiten Pitchwinkelkennlinie betrieben werden. Die erste Betriebsart kann beispielsweise eine normale Betriebsart, beispielsweise ohne Regen, darstellen, während die zweite Betriebsart aktiviert wird, wenn durch einen Niederschlagssensor ein Niederschlag beispielsweise Regen oder Schnee detektiert worden ist. In der ersten Betriebsart kann beispielsweise trockenes Wetter vorherrschen während in der zweiten Betriebsart ein Niederschlag vorhanden sein kann.

Die vorliegende Erfindung basiert auf der Erkenntnis, dass bei Regen bzw. bei einer nassen Rotoroberfläche eine turbulente Grenzschichtströmung vorhanden sein kann. Eine turbulente Grenzschichtströmung kann dazu führen, dass bei der Umströmung des Profils des Rotorblattes der Windenergieanlage kleinere Blattanstellwinkel, zu einer Strömungsablösung führen können. Dies kann insbesondere an der Hinterkante des Rotorblattes erfolgen. Die Strömungsablösung bei nassen Rotorblättern kann bereits bei kleineren Anstellwinkeln als bei einem Rotorblatt mit einer trockenen Oberfläche erfolgen. Bei Rotorblättern mit einer trockenen Oberfläche kann mit einer laminaren Laufstrecke der Grenzschichtströmung von der Vorderkante weg gerechnet werden, bevor die Strömung in eine turbulente Strömung umschlagen kann. Wenn die Windenergieanlage und somit die Rotorblätter der Windenergieanlage bei Niederschlag, wie beispielsweise Regen, betrieben werden, dann sollen kleinere effektive Profilanstellwinkel über den Rotorradius gewählt werden als bei trockenen Rotorblättern. Entsprechend wird vorgeschlagen, im Falle von Niederschlag eine Betriebskennlinie mit anderem Blattwinkel zu verwenden. Eine Steuereinheit kann entsprechend in Abhängigkeit eines erfassten Niederschlags eine andere Betriebskennlinie auswählen, und einen anderen Blattwinkel einstellen, so dass sich der jeweilige Anstellwinkel entlang des Rotorblattes entsprechend verändert.

Es wird unterschieden zwischen einem Anstellwinkel, der die Anstellung des Rotorblattprofils zum Wind bzw. einer Bezugsrichtung an der jeweiligen Stelle entlang des Rotorblattes beschreibt, und einem Blattwinkel, der auch synonym als Pitchwinkel bezeichnet werden kann, der den an der Blattwurzel eingestellten Winkel bezeichnet.

Gemäß einer Ausführungsform wird vorgeschlagen, dass eine Umschaltung von der zweiten Betriebsart in die erste Betriebsart erfolgt, sobald erfasst wurde, dass kein Niederschlag mehr fällt und seit dieser Erfassung eine vorgebbare Latenzzeit verstrichen ist. Wenn die Windenergieanlage bei Regen betrieben wird, oder bei einem anderen Niederschlag, wird die Windenergieanlage hierbei in der zweiten Betriebsart betrieben. Ist der Niederschlag beendet, sollte in die erste Betriebsart zurückgeschaltet werden.

Es wurde aber erkannt, dass besonders ein feuchtes Rotorblatt einen Betrieb mit der zweiten Betriebsart sinnvoll macht. Um das zu berücksichtigen, wird das Einhalten einer Latenzzeit vorgeschlagen, so dass erst diese Latenzzeit abgewartet wird, bis in die erste Betriebsart zurückgeschaltet wird, damit das Rotorblatt in dieser Latenzzeit trocknen kann. Diese Latenzzeit kann vorgegeben werden. Vorzugsweise wird sie abhängig von Umweltparametern vorgegeben, die einen Trocknungsprozess des Rotorblatts beeinflussen können, insbesondere abhängig einer Windgeschwindigkeit und/oder einer Außentemperatur. Vorzugsweise liegt die Latenzzeit in einem Bereich von 5 bis 30 Minuten.

Für eine Umschaltung von der ersten Betriebsart auf die zweite Betriebsart ist keine Latenzzeit nötig oder sie kann als zweite Latenzzeit deutlich kürzer gewählt werden, z.B. um wenigstens 80% oder wenigstens 90% kleiner als die erste Latenzzeit zum Umschalten von der zweiten Betriebsart auf die erste.

Weitere Ausführungsbeispiele der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß der Erfindung,
- Fig. 2: zeigt eine schematische Darstellung von effektiven Profilanstellwinkelverhältnissen an einem Rotorblatt einer Windenergieanlage gemäß der Erfindung, und
- Fig. 3 bis 6: zeigen jeweils einen Graphen zur Veranschaulichung von Pitchwinkelkennlinien gemäß der Erfindung.

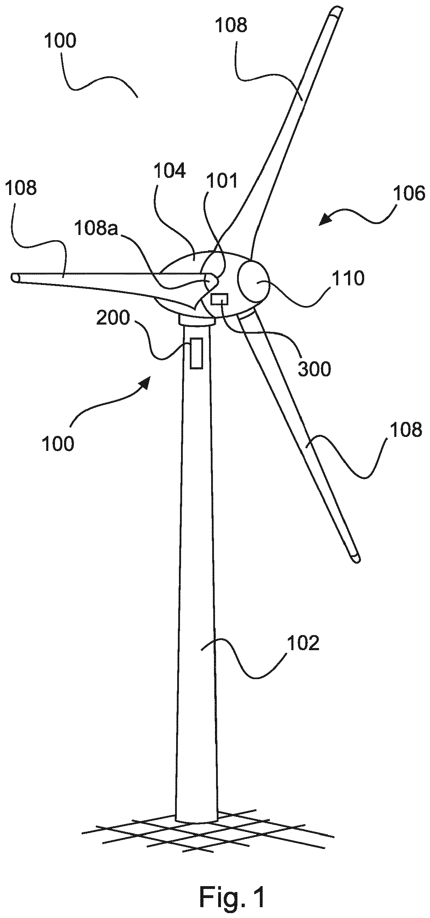

Fig. 1 zeigt eine Windenergieanlage 100 mit einem Turm 102 und einer Gondel 104. An der Gondel 104 ist ein aerodynamischer Rotor 106 mit einem Spinner 110 und drei Rotorblättern 108 angeordnet. Die Rotorblätter 108 sind jeweils mit einer Rotorblattwurzel 108a an einer Nabe befestigt. Der Rotor 106 wird im Betrieb durch den Wind in eine Drehbewegung versetzt und treibt dadurch einen (nicht dargestellten) Generator in der Gondel 104 an. Der Pitchwinkel der Rotorblätter 108a kann durch Pitchmotoren 101 geändert oder eingestellt werden.

Die Windenergieanlage weist ferner eine Steuereinheit 200 zum Steuern des Betriebs der Windenergieanlage und einen Sensor 300 zum Erfassen eines Niederschlags auf. Der Sensor kann als ein Niederschlagssensor 300 ausgestaltet sein.

In der Steuereinheit 200 können verschiedene Pitchkennlinien gespeichert werden. Die Steuereinheit 200 ist dazu ausgestaltet, anhand der Messergebnisse des Niederschlagssensors 300 eine der gespeicherten Pitchkennlinien auszuwählen und den Betrieb der Windenergieanlage 100 entsprechend zu steuern. Hierbei kann die Steuereinheit 200 insbesondere den Pitchwinkel der Rotorblätter 108 einstellen.

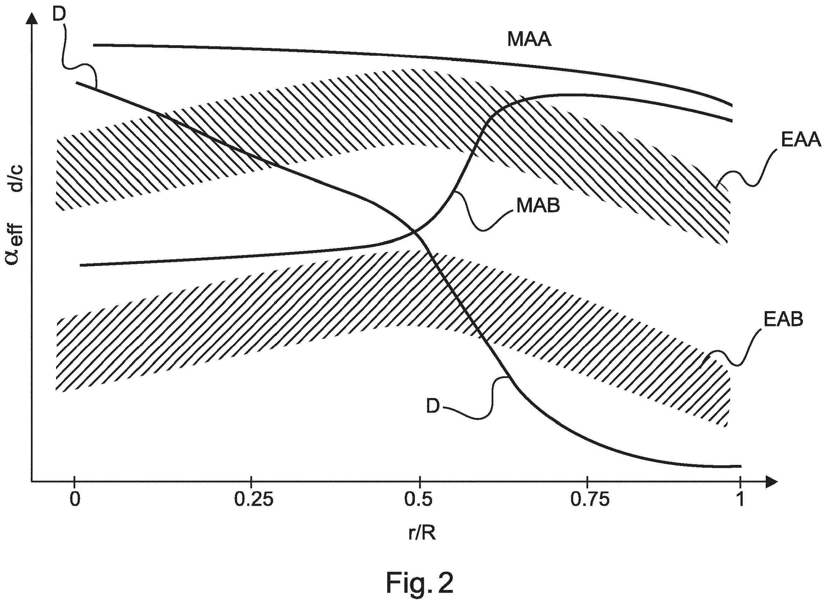

Fig. 2 zeigt eine schematische Darstellung der effektiven Profilanstellwinkelverhältnissen an einem Rotorblatt einer Windenergieanlage gemäß der Erfindung.

In Fig. 2 sind verschiedene effektive Profilanstellwinkel an den Rotorblättern der erfindungsgemäßen Windenergieanlage bei unterschiedlichen meteorologischen Bedingungen dargestellt.

In Fig. 2 ist der maximal zulässige Profilanstellwinkel MAA für ein trockenes Blatt, der maximal zulässige Profilanstellwinkel MAB für ein nasses Blatt, ein relativer Dickenverlauf D, ein effektiver Profilanstellwinkelbereich EAA in der ersten Betriebsart A (trocken) und ein effektiver Profilanstellwinkelbereich EAB in einer zweiten Betriebsart B (nass) gezeigt. Der relative Dickenverlauf D kann einen typischen Verlauf einer relativen Profildicke eines Rotorblattes über den Radius der Windenergieanlage darstellen, welcher mit dem maximalen Rotorradius normiert worden ist.

Wie in Fig. 2 zu sehen, ist der maximal zulässige Profilanstellwinkel MAB bei Nässe (Betriebsart B) immer kleiner als der entsprechende maximal zulässige Profilanstellwinkel MAA für ein trockenes Blatt (Betriebsart A), je größer die relative Dicke des Rotorblattes ist (welche durch den relativen Dickenverlauf D dargestellt wird), desto größer wird der Unterschied zwischen dem maximal zulässigen Profilanstellwinkel MAA bei einem trockenen Blatt und dem maximal zulässigen Profilanstellwinkel MAB für ein nasses Blatt. Für das Verhältnis zwischen Radius und maximalen Rotorradius r/R von kleiner 0,65 ist ein deutlicher Abfall des maximal zulässigen Anstellwinkels MAB für ein nasses Blatt zu sehen, d.h. in diesem Bereich weicht der maximal zulässige Profilanstellwinkel MAB eines nassen Rotorblattes erheblich von dem maximal zulässigen Profilanstellwinkel MAA eines trockenen Rotorblattes ab.

In Fig. 2 sind die im Betrieb der Windenergieanlage auftretenden effektiven Profilanstellwinkel EAA im trockenen Betrieb und die effektiven Profilanstellwinkel EAB im nassen Betrieb dargestellt. Wie aus diesen beiden Kurven zu sehen, gibt es erhebliche Unterschiede zwischen einem trockenen Rotorblatt und einem nassen Rotorblatt. Wie in Fig. 2 zu sehen, kann in der ersten Betriebsart A, nämlich bei Trockenheit, das Rotorblatt mit höheren Profilanstellwinkeln betrieben werden als bei einem nassen Rotorblatt, nämlich in der zweiten Betriebsart B.

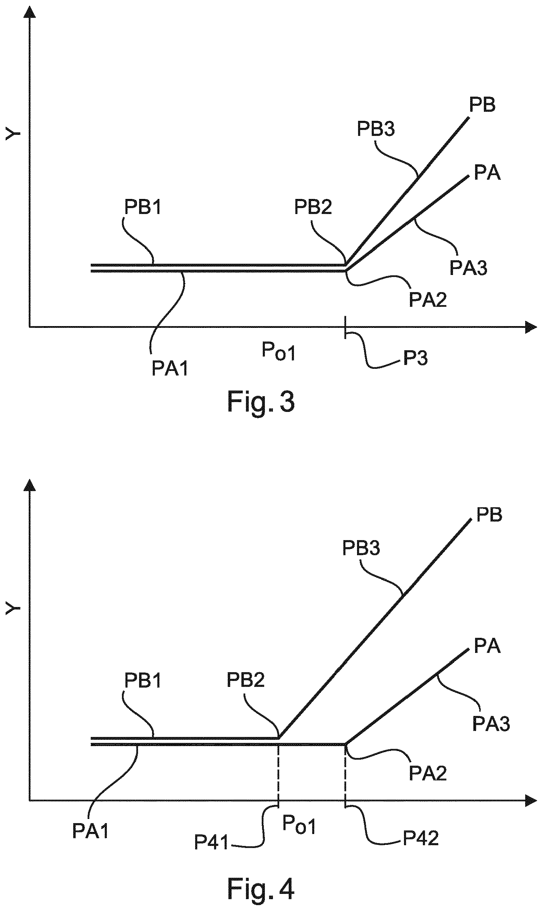

In den Figuren 3 bis 6 sind jeweils unterschiedliche Pitchwinkelkennlinien gemäß der Erfindung dargestellt. Die gezeigten Pitchwinkelkennlinien betreffen einen sogenannten Teillastbetrieb, in dem die Windenergieanlage ihre Nennleistung noch nicht erreicht hat, oder allenfalls am Ende der gezeigten Kennlinien erreicht hat. Die gezeigten Pitchkennlinien sind somit jeweils für einen Bereich bis zum Erreichen von Nennleistung vorgesehen. Die Pitchwinkelkennlinie PA für die erste Betriebsart (trockenes Rotorblatt) weist einen ersten Abschnitt PA1 mit einem konstanten Pitchwinkel für verschiedene Ausgangsleistungen P auf. Die Pitchkennlinie weist einen Punkt PA2 bei einer Ausgangsleistung P3 auf, von welchem aus der konstante Abschnitt PA1 in einen zweiten Abschnitt PA3 mit einer Steigerung übergeht. Die Pitchwinkelkennlinie PB in der zweiten Betriebsart B (Nässe bzw. Niederschlag) weist ebenfalls einen ersten Abschnitt PB1 auf, welcher für unterschiedliche elektrische Ausgangsleistungen P einen konstanten Pitchwinkel aufweist, einen Übergangspunkt PB2 bei einer Ausgangsleistung P3 und einen zweiten Abschnitt PB3, welcher eine Steigerung aufweist, d.h. bei Steigerung der Ausgangsleistung erfolgt eine Steigerung des Pitchwinkels.

In Fig. 3 ist der Punkt PA2 und der Punkt PB2 im Wesentlichen bei der gleichen Ausgangsleistung P3 vorhanden. Die ersten Abschnitte PA1, PB1 weisen im Wesentlichen den gleichen Pitchwinkel auf. Die zweiten Abschnitte PA3, PB3 weisen unterschiedliche Steigerungen auf.

In dem Ausführungsbeispiel von Fig. 4 ist der Punkt PB2 bei einer geringeren Ausgangsleistung P41 als bei dem Punkt PA2 (Ausgangsleistung P42). Ferner können die Steigerungen der zweiten Abschnitte PB3, PA3 unterschiedlich sein.

In dem Ausführungsbeispiel von Fig. 3 und Fig. 4 sind die Pitchwinkel in dem ersten Abschnitt PB1, PA1 bis zu dem Punkt PB2 gleich und erst bei einer höheren Ausgangsleistung reichen die Pitchwinkelwerte voneinander ab.

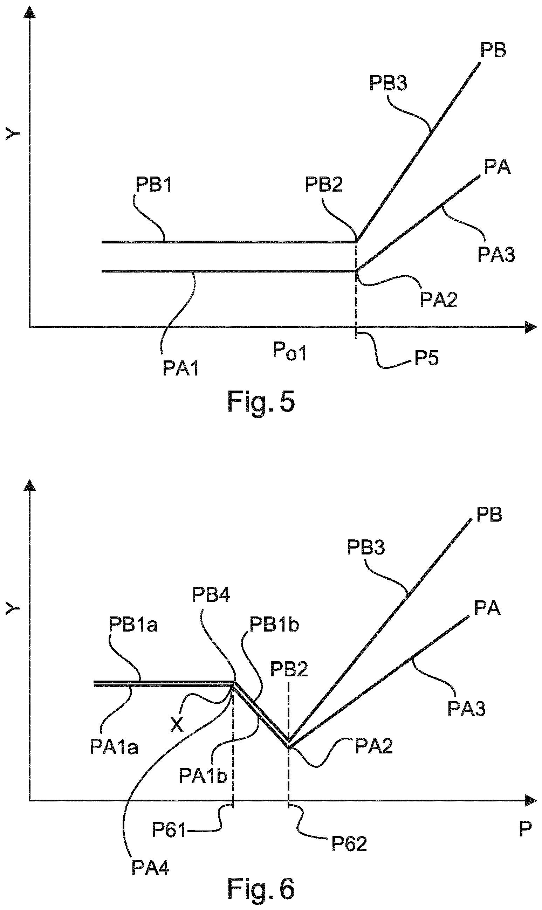

In dem Ausführungsbeispiel von Fig. 5 sind die Pitchwinkel in dem ersten Abschnitt PB1 höher als in dem ersten Abschnitt PA1. Die Punkte PB2, PA2 liegen bei einer Ausgangsleistung P5.

In dem Ausführungsbeispiel von Fig. 6 sind die Pitchwinkel in den jeweiligen ersten Bereichen PB1, PA1 bis zu einem Punkt PB2, PA2 gleich und erst ab diesem Punkt PB2, PA2 weist die Steigerung der zweiten Abschnitte PB3, PA3 eine unterschiedliche Steigerung auf. Bis zu einer Leistung P61 ist der Pitchwinkel in beiden Betriebsarten gleich und konstant. Zwischen der Ausgangsleistung P61 und P62 fällt der Pitchwinkel bei steigender Ausgangsleistung. Dies gilt für beide Betriebsarten. Ab dem Punkt P62 steigen die Pitchwinkel der ersten und zweiten Kennlinie mit unterschiedlichen Steigerungen an.

Gemäß der Erfindung verwendet die Steuereinheit 200 die erste oder zweite Pitchkennlinie zum Steuern der Pitchwinkel der Rotorblätter in Abhängigkeit der abgegebenen Ausgangsleistung.

Mittels des Niederschlagssensors 300 kann erfasst werden, ob die Windenergieanlage bei trockenen Bedingungen oder bei Niederschlag betrieben wird. Wenn die Windenergieanlage bei trockenen Bedingungen betrieben wird, dann kann mit Hilfe der Steuereinheit 200 die erste Betriebsart betrieben werden. In dieser Betriebsart wird die Windenergieanlage basierend auf der ersten Pitchkennlinie PA betrieben. Wenn durch den Niederschlagssensor erfasst wird, dass Niederschlag vorhanden ist, dann steuert die Steuereinheit 200 den Betrieb der Windenergieanlage und insbesondere die Pitchwinkel gemäß der zweiten Pitchwinkelkennlinie PB. Gemäß der Erfindung kann ein Umschalten zwischen den Betriebsarten stufenlos durchgeführt werden. Beim Umschalten der Betriebsarten kann die Stärke des Niederschlages mit berücksichtigt werden.

Gemäß der Erfindung wird somit möglich, dass in der ersten Betriebsart A höhere Leistungsbeiwerte als in der zweiten Betriebsart B erreicht werden können, da höhere Anstellwinkel höhere Auftriebsbeiwerte und damit höhere axiale Indikationsfaktoren zur Folge haben können. Durch die erfindungsgemäße Unterscheidung, ob Niederschlag vorhanden ist oder nicht, kann die Windenergieanlage mit einer höhere Ausgangsleistung, gemessen über die Zeit, betrieben werden.

## Patentansprüche

1. Verfahren zum Steuern einer Windenergieanlage (100), welche einen Rotor (106) mit einer Mehrzahl von Rotorblättern (108) aufweist, welche jeweils eine Rotorblattwurzel (108a) aufweisen, wobei ein Pitchwinkel der Rotorblätter (108) mittels Pitchmotoren (101), welche an den Rotorblattwurzeln (108a) angreifen, einstellbar ist, mit den Schritten:
Erfassen eines Niederschlags im Bereich der Windenergieanlage (100) durch einen Niederschlagssensor (300), und
Steuern der Windenergieanlage in einer ersten Betriebsart basierend auf einer ersten Pitchwinkelkennlinie, bei der der Pitchwinkel in Abhängigkeit der Leistung eingestellt wird, und in einer zweiten Betriebsart basierend auf einer zweiten Pitchwinkelkennlinie, bei der der Pitchwinkel in Abhängigkeit der Leistung eingestellt wird,
wobei die zweite Pitchwinkelkennlinie von der ersten Pitchwinkelkennlinie verschieden ist,
wobei die erste Betriebsart ausgewählt wird, wenn kein Niederschlag vorhanden ist und die zweite Betriebsart ausgewählt wird, wenn Niederschlag vorhanden ist.

2. Verfahren nach Anspruch 1, wobei
die erste und zweite Pitchwinkelkennlinie jeweils
- einen ersten geraden Abschnitt (PA1, PB1) aufweist, in dem der Pitchwinkel unverändert bleibt, und
- einen zweiten Abschnitt (PA3, PB3) aufweist, welcher eine Steigung aufweist, so dass bei steigender Ausgangsleistung der Pitchwinkel erhöht wird.

3. Verfahren nach Anspruch 2, wobei
die Länge des jeweiligen ersten Abschnitts (PA1, PB1) der ersten und zweiten Pitchwinkelkennlinie (PA, PB) unterschiedlich sein können, und/oder
wobei die Steigung der zweiten Abschnitte (PA3, PB3) unterschiedlich sein können.

4. Verfahren nach einem der vorstehenden Ansprüche, wobei die erste und zweite Pitchkennlinie jeweils für einen Bereich bis zum Erreichen von Nennleistung vorgesehen sind.

5. Verfahren nach einem der vorstehenden Ansprüche, **dadurch gekennzeichnet, dass** eine Umschaltung von der zweiten Betriebsart in die erste Betriebsart erfolgt, sobald
- erfasst wurde, dass kein Niederschlag mehr fällt und
- seit dieser Erfassung eine vorgebbare Latenzzeit verstrichen ist.

6. Windenergieanlage, mit
einem Rotor (106) mit einer Mehrzahl von Rotorblättern (108), welche jeweils eine Rotorblattwurzel (108a) aufweisen, wobei ein Pitchwinkel der Rotorblätter (108) mittels Pitchmotoren (101), welche an den Rotorblattwurzeln (108a) angreifen, einstellbar ist,
einem Niederschlagssensor (300) zum Erfassen eines Niederschlags im Bereich der Windenergieanlage,
einer Steuereinheit (200) zum Steuern des Betriebs der Windenergieanlage in einer ersten Betriebsart basierend auf einer ersten Pitchwinkelkennlinie und in einer zweiten Betriebsart basierend auf einer zweiten Pitchwinkelkennlinie,
wobei die Steuereinheit (200) dazu ausgestaltet ist, anhand der Ausgangssignale des Niederschlagssensors (300) die erste oder zweite Betriebsart auszuwählen,
wobei die erste und zweite Pitchwinkelkennlinie jeweils den Pitchwinkel in Abhängigkeit der Leistung einstellen,
wobei die zweite Pitchwinkelkennlinie von der ersten Pitchwinkelkennlinie verschieden ist.

7. Windenergieanlage nach Anspruch 6, dazu vorbereitet, ein Verfahren nach einem der Ansprüche 1 bis 5 auszuführen.

## Claims

1. A method of controlling a wind power installation (100) which comprises a rotor (106) having a plurality of rotor blades (108), each having a rotor blade root (108a), wherein a pitch angle of the rotor blades (108) is adjustable by means of pitch motors (101) which engage the rotor blade roots (108a), comprising the steps:
detecting a precipitation in the region of the wind power installation (100) by a precipitation sensor (300), and
controlling the wind power installation in a first operating mode based on a first pitch angle characteristic in which the pitch angle is set in dependence on the power and in a second operating mode based on a second pitch angle characteristic, in which the pitch angle is set in dependence on the power,
wherein the second pitch angle characteristic is different from the first pitch angle characteristic,
wherein the first operating mode is selected if there is no precipitation and the second operating mode is selected if there is precipitation.

2. A method according to claim 1 wherein
the first and second pitch characteristics respectively have
- a first straight portion (PA1, PB1) in which the pitch angle remains unchanged, and
- a second portion (PA3, PB3) having a gradient so that the pitch angle is increased with increasing output power.

3. A method according to claim 2 wherein
the length of the respective first portion (PA1, PB1) of the first and second pitch angle characteristic (PA, PB) can be different, and/or
wherein the gradient of the second portions (PA3, PB3) can be different.

4. A method according to one of the preceding claims wherein the first and second pitch characteristics are respectively provided for a range until nominal power is reached.

5. A method according to one of the preceding claims **characterised in that** switching-over from the second operating mode into the first operating mode is effected as soon as
- it was detected that precipitation is no longer falling, and
- a predeterminable latency time has elapsed since said detection.

6. A wind power installation comprising
a rotor (106) having a plurality of rotor blades (108) which each have a rotor blade root (108a), wherein a pitch angle of the rotor blades (108) is adjustable by means of pitch motors (101) which engage the rotor blade roots (108a),
a precipitation sensor (300) for detecting precipitation in the region of the wind power installation,
a control unit (200) for controlling operation of the wind power installation in a first operating mode based on a first pitch angle characteristic and in a second operating mode based on a second pitch angle characteristic,
wherein the control unit (200) is adapted to select the first or second operating mode on the basis of the output signals of the precipitation sensor (300),
wherein the first and second pitch angle characteristics respectively set the pitch angle in dependence on the power,
wherein the second pitch angle characteristic is different from the first pitch angle characteristic.

7. A wind power installation according to claim 6 adapted to carry out a method according to one of claims 1 to 5.

## Revendications

1. Procédé de commande d'une éolienne (100), laquelle présente un rotor (106) avec une multitude de pales de rotor (108), lesquelles présentent respectivement une racine de pale de rotor (108a), dans lequel un angle de pas des pales de rotor (108) peut être réglé au moyen de moteurs de pas (101), lesquels s'engagent sur les racines de pale de rotor (108a), avec les étapes :
de détection d'une précipitation dans la zone de l'éolienne (100) par un capteur de précipitations (300), et
de commande de l'éolienne dans un premier mode de fonctionnement sur la base d'une première caractéristique d'angle de pas, pour laquelle l'angle de pas est réglé en fonction de la puissance, et dans un deuxième mode de fonctionnement sur la base d'une deuxième caractéristique d'angle de pas, pour laquelle l'angle de pas est réglé en fonction de la puissance,
dans lequel la deuxième caractéristique d'angle de pas est différente de la première caractéristique d'angle de pas,
dans lequel le premier mode de fonctionnement est sélectionné quand aucune précipitation n'est présente et le deuxième mode de fonctionnement est sélectionné quand une précipitation est présente.

2. Procédé selon la revendication 1, dans lequel la première et la deuxième caractéristique d'angle de pas
- présentent respectivement une première section rectiligne (PA1, PB1), dans laquelle l'angle de pas reste inchangé, et
- présente respectivement une deuxième section (PA3, PB3), laquelle présente une pente de telle sorte que l'angle de pas est augmenté lors d'une croissance de la puissance de sortie.

3. Procédé selon la revendication 2, dans lequel la longueur de la première section (PA1, PB1) respective de la première et de la deuxième caractéristique d'angle de pas (PA, PB) peuvent être différentes, et/ou
dans lequel la pente des deuxièmes sections (PA3, PB3) peuvent être différentes.

4. Procédé selon l'une quelconque des revendications précédentes, dans lequel la première et la deuxième caractéristique de pas sont prévues respectivement pour une zone jusqu'à atteindre une puissance nominale.

5. Procédé selon l'une quelconque des revendications précédentes, **caractérisé en ce qu'**une commutation depuis le deuxième mode de fonctionnement dans le premier mode de fonctionnement est effectuée dès
- qu'il a été détecté que plus aucune précipitation ne tombe et
- un temps de latence pouvant être spécifié est passé depuis ladite détection.

6. Eolienne avec
un rotor (106) avec une multitude de pales de rotor (108), lesquelles présentent respectivement une racine de pale de rotor (108a), dans laquelle un angle de pas des pales de rotor (108) peut être réglé au moyen de moteurs de pas (101), lesquels s'engagent sur les racines de pale de rotor (108a),
un capteur de précipitations (300) pour détecter des précipitations dans la zone de l'éolienne,
une unité de commande (200) pour commander le fonctionnement de l'éolienne dans un premier mode de fonctionnement sur la base d'une première caractéristique d'angle de pas et dans un deuxième mode de fonctionnement sur la base d'une deuxième caractéristique d'angle de pas,
dans laquelle l'unité de commande (200) est configurée pour sélectionner à l'aide des signaux de sortie du capteur de précipitations (300) le premier ou le deuxième mode fonctionnement,
dans laquelle la première et la deuxième caractéristique d'angle de pas règlent respectivement l'angle de pas en fonction de la puissance,
dans laquelle la deuxième caractéristique d'angle de pas est différente de la première caractéristique d'angle de pas.

7. Eolienne selon la revendication 6, préparée pour exécuter un procédé selon l'une quelconque des revendications 1 à 5.
